# EUROPÄISCHE PATENTSCHRIFT

(11) **EP 4 445 985 B1**
(45) Veröffentlichungstag und Bekanntmachung des Hinweises auf die Patenterteilung: **20.08.2025**
(21) Anmeldenummer: 24168124.6
(22) Anmeldetag: 02.04.2024
(51) Int. Cl.: B01D 45/12

(54) **EINRICHTUNG ZUR BEARBEITUNG VON METALL UND NICHTMETALL ENTHALTENDEN WERKSTOFFVERBUNDWERKSTÜCKEN**
DEVICE FOR PROCESSING COMPOSITE WORKPIECES CONTAINING METAL AND NON-METAL
DISPOSITIF POUR L'USINAGE DE PIÈCES COMPOSITES CONTENANT DU MÉTAL ET DU NON-MÉTAL

(30) Priorität: 14.04.2023 DE 202023101901 U
(43) Veröffentlichungstag der Anmeldung: 16.10.2024
(73) Patentinhaber: Uniflex-Hydraulik GmbH, 61184 Karben (DE)
(72) Erfinder: Schnell, Alexander, 61209 Echzell (DE)
(74) Vertreter: Grättinger Möhring von Poschinger Patentanwälte Partnerschaft mbB

(56) Entgegenhaltungen:
- EP-A1- 1 671 571
- WO-A1-2016/208888
- JP-A- 2008 036 621
- JP-A- 2017 035 677

## Beschreibung

Die vorliegende Erfindung betrifft eine Einrichtung zur Bearbeitung von Metall und Nichtmetall enthaltenden Werkstoffverbundwerkstücken, umfassend eine Maschine, welche der Bearbeitung solcher Werkstoffverbundwerkstücke dient und Metall und Nichtmetall enthaltende Späne oder sonstige Partikel absondert, und eine Absaug- und Reinigungsvorrichtung für mit derartigen Partikeln belastete Luft, wobei die Absaug- und Reinigungsvorrichtung ein Gebläse und, für eine mehrstufige Reinigung der partikelbelasteten Luft im Vollstrom in strömungstechnischer Abfolge durchströmt, eine Zyklon-Abscheidestufe, eine mechanische Filterstufe und zwei Aktivkohle-Filterstufen umfasst.

Beim Schneiden bzw. Trennen und sonstiger unter Bildung von Spänen bzw. Abrieb erfolgender mechanischer Bearbeitung von solchen Werkstoffverbundwerkstücken, welche Metall (z. B. Eisenmetall) sowie Nichtmetall (z. B. Kunststoff, Latex, Gummi oder dergleichen) enthalten oder daraus bestehen, entstehen typischerweise Dämpfe, Rauch und/oder Qualm. Die betreffende Dampf-, Rauch- bzw. Qualmbildung hängt häufig damit zusammen, dass bei der Bearbeitung des metallischen Werkstoffs vergleichsweise hohe Temperaturen entstehen, so dass die sich bildenden Späne häufig sogar glühen. Bei den entsprechenden Temperaturen verdampft/verbrennt der nichtmetallische Werkstoff, eben unter der Bildung von Dampf, Rauch und/oder Qualm. Wegen der vergleichsweise großen Oberfläche ist diese Entwicklung von Dampf, Rauch und/oder Qualm besonders intensiv, wenn nichtmetallische Anteile des Werkstoffs an den sich bei der Werkstück-Bearbeitung bildenden heißen bzw. ggf. glühenden Metall-Spänen anhaften und verdampfen.

Zum Schutz des Maschinenpersonals und anderer sich in der Nähe der jeweiligen Bearbeitungsmaschine aufhaltender Personen ist eine Ausbreitung des sich bildenden Dampfes, Rauchs bzw. Qualms unbedingt zu vermeiden. So sind die betreffenden Maschinen vielfach mit Abzugsanlagen ausgestattet, welche die mit Dampf, Rauch bzw. Qualm beladene Luft ins Freie befördern. Diese Praxis ist aber nicht nur als unmittelbare Umweltverschmutzung anzusehen und aus diesem Grunde fragwürdig. Sie ist auch energetisch nachteilig; denn über die abgesaugte Luft geht - falls nicht eine Wärmerückgewinnung erfolgt - Wärme verloren, so dass in dem betreffenden Betriebsgebäude entsprechend intensiv nachgeheizt werden muss Dokumente EP 1 671 571 A1, JP 2017 035677 A, WO 2016/208888 A1 und JP 2008 036621 A sind aus dem Stand der Technik bekannt.

Vor diesem Hintergrund gibt es Ansätze, die von der Maschine abgesaugte, mit Dampf, Rauch bzw. Qualm belastete sowie typischerweise zusätzlich (ggf. noch glühende) Metallspäne enthaltende Luft maschinennah einer Reinigung zu unterziehen und die so gereinigte Luft wieder in das Betriebsgebäude zu entlassen.

Die vorliegende Erfindung ist darauf gerichtet, zu einer weiteren Verbesserung der Arbeitsplatzhygiene bei eingangs genannten Einrichtungen zur Bearbeitung von Metall und Nichtmetall enthaltenden Werkstoffverbundwerkstücken sowie weiteren praxisrelevanten Verbesserungen gegenüber dem Stand der Technik beizutragen. Insbesondere geht es der Erfindung darum, die derzeit bestehende Situation im Hinblick auf die Gesamtheit an praxisrelevanten Anforderungen wie Luftqualität (im Sinne von Reinigungsleistung der Absaug- und Reinigungsvorrichtung), energetische Effizienz, Raumbedarf, Flexibilität der Absaug- und Reinigungsvorrichtung im Hinblick auf wechselnde Anforderungen, Lärmschutz und Wartungsaufwand zu verbessern, wobei die dargelegten Einzel-Zielsetzungen erkennbar teilweise in einem Konfliktverhältnis zueinander stehen.

Gelöst wird diese Aufgabenstellung gemäß der vorliegenden Erfindung, indem eine eingangs angegebene Einrichtung zur Bearbeitung von Metall und Nichtmetall enthaltenden Werkstoffverbundwerkstücken weiterhin die folgenden, synergetisch zusammenwirkenden Merkmale aufweist:
Ein erster Bereich der Absaug- und Reinigungsvorrichtung umfasst, durch zwei horizontale Trennböden strömungstechnisch voneinander getrennt, drei übereinander angeordnete Zonen;
die Zyklon-Abscheidestufe weist ein Paket aus mindestens drei, bevorzugt mindestens sechs strömungstechnisch zueinander parallel geschalteten, nach oben gerichtete Auslässe für die gereinigte Luft aufweisenden Einzelzyklonen auf, welche dergestalt in den unteren Trennboden eingegliedert sind, dass ihre Feststoffauslässe in die untere Zone und die Luftauslässe in die mittlere Zone münden;
der obere Trennboden weist einen Durchbruch für eine strömungstechnisch zwischen der mittleren Zone und der oberen Zone angeordnete, die mechanische Filterstufe und eine erste Aktivkohle-Filterstufen umfassende Filtergruppe auf;
räumlich neben dem ersten Bereich ist eine mit der oberen Zone des ersten Bereichs kommunizierende Beruhigungskammer angeordnet, welche über Trennwände von der ersten Zone und der zweiten Zone abgetrennt ist und über einen in einer Zwischenwand, welche die Beruhigungszone von einer neben dieser angeordneten Gebläsekammer trennt, angeordneten Auslass mit der Ansaugöffnung des Gebläses kommuniziert;
das Gebläse ist, bevorzugt als Radialgebläse ausgeführt, mit einem in der Gebläsekammer angeordneten, durch einen Motor um eine horizontale Achse rotierend angetriebenen Lüfterrad ausgeführt;
eine zwischen dem Motor und dem Lüfterrad angeordnete Trennwand trennt die Gebläsekammer von einer neben dieser angeordneten, den Motor beherbergenden Ausströmkammer, welche aus der Gebläsekammer heraus über eine zweite Aktivkohle-Filterstufe mit vorgereinigter Luft beaufschlagt wird.

Im Ergebnis ergeben sich durch die erfindungsgemäße Ausführung der Einrichtung zur Bearbeitung von Metall und Nichtmetall enthaltenden Werkstoffverbundwerkstücken diverse Vorteile von ausgesprochen hoher praktischer Relevanz. Durch die - verglichen mit einem Einzelzyklon vergleichbaren Luftdurchsatzes - vergrößerte Oberfläche der mindestens drei, bevorzugt mindestens sechs, besonders bevorzugt acht Einzelzyklone eines Pakets erfolgt mit höherer Zuverlässigkeit ein Verlöschen beim Eintritt in die Reinigungseinrichtung noch glühender Späne; dies reduziert die Gefahr einer Beschädigung nachgelagerter Filterstufen. Die durch die erfindungsgemäße Ausführung, Ausgestaltung und räumliche Beziehung der Zyklon-Abscheidestufe und der dieser nachgeschalteten Filterstufen, namentlich die Bereitstellung einer ersten Aktivkohle-Filtereinheit stromaufwärts des Gebläses und einer zweiten Aktivkohle-Filtereinheit stromabwärts des Gebläses, lässt sich, verglichen mit dem Stand der Technik, die Geräuschentwicklung substantiell reduzieren; dies ist angesichts der beabsichtigten arbeitsplatznahen Anordnung der Absaug- und Reinigungsvorrichtung von größter praktischer Bedeutung. Zudem tragen die für die erfindungsgemäße Einrichtung charakteristischen Merkmale dazu bei, dass die Absaug- und Reinigungseinrichtung - im Sinne einer hohen Einsatz-Flexibilität - auch bei in erheblichem Maße unterschiedlichen Luftdurchsätzen eine gleichermaßen hohe Reinigungsleistung und - trotz ihrer überragenden Leistungsfähigkeit - einen nur sehr geringen Raumbedarf besitzt. Die hohe Flexibilität wiederum ist mittelbar auch ein entscheidender Effizienz-Faktor; denn die hohe Reinigungsleistung auch im Teillastbereich erlaubt den Betrieb der Absaug- und Reinigungseinrichtung - ohne Einbuße der Wirksamkeit - mit reduziertem Luftdurchsatz, wodurch sich Betriebskosten einsparen und Wartungsintervalle verlängern lassen.

Gemäß einer - unter Gesichtspunkten hoher Effizienz bei kleinsten Abmessungen - ersten bevorzugten Weiterbildung der vorliegenden Erfindung wird die zweite Aktivkohle-Filterstufe vertikal von unten nach oben durchströmt. Besonders bevorzugt ist sie dabei auf einer die Ausströmkammer nach unten begrenzenden Bodenplatte aufgebaut und wird über einen dem Ausgang der Gebläsekammer nachgeschalteten, unterhalb der Bodenplatte angeordneten Kanal angeströmt. Die aus der zweiten Aktivkohle-Filterstufe abströmende gereinigte Luft kann dabei den - oberhalb der zweiten Aktivkohle-Filterstufe angeordneten - Gebläsemotor anströmen und auf diese Weise dessen aktive Kühlung bewirken.

Eine andere bevorzugte Weiterbildung der vorliegenden Erfindung zeichnet sich dadurch aus, dass die Einzelzyklone auf zwei zueinander parallele Reihen aufgeteilt und beidseits eines sie beaufschlagenden Verteilerrohres angeordnet sind. Auf diese Weise lässt sich der für die Zyklon-Abscheidestufe zur Verfügung stehende Bauraum bestmöglich ausnutzen, was eine besonders kompakte Bauweise der gesamten Absaug- und Reinigungsvorrichtung begünstigt.

Gemäß einer nochmals anderen bevorzugten Weiterbildung der Erfindung sind die Filteraggregate der mechanischen Filterstufe und der ersten Aktivkohle-Filterstufe in der Filtergruppe zu einer von unten nach oben durchströmten, gemeinsam auswechselbaren Einheit zusammengefasst. Im Hinblick auf eine mit geringem Aufwand verbundene Wartung ist weiterhin von Vorteil, wenn die Absaug- und Reinigungsvorrichtung einen Korpus mit frontseitig angeordneten Türen aufweist, durch welche hindurch die Filteraggregate der mechanische Filterstufe, der ersten Aktivkohle-Filterstufe und der zweiten Aktivkohle-Filterstufen zugänglich und auswechselbar sind. Durch eine entsprechende Tür hindurch ist bevorzugt weiterhin eine - in der ersten Zone - unterhalb der Einzelzyklone angeordnete Grobschmutzlade dem Korpus der Absaug- und Reinigungsvorrichtung entnehmbar.

Eine wiederum andere bevorzugte Weiterbildung der Erfindung zeichnet sich dadurch aus, dass die mechanische Filterstufe mehrere nacheinander durchströmte, unterschiedliche Filtercharakteristiken aufweisende Filterlagen aufweist. Bei typischen Anwendungssituationen, wie sie beispielsweise beim Durchtrennen von armierten Hochdruck-Hydraulikschläuchen mittels einer Schlauchtrennmaschine vorliegen, ist dabei im Hinblick auf eine hohe Effizienz der Abluftreinigung besonders günstig, wenn die als erstes durchströmte Lage der mechanischen Filterstufe aus PPI Filterschaum besteht und/oder wenn die als letztes durchströmte Lage der mechanischen Filterstufe als H13 HEPA Mikrofilter ausgeführt ist. Bei einem besonders vorteilhaften dreilagigen Aufbau der mechanischen Filterstufe ist dabei besonders günstig, wenn die mittlere Lage aus einem Filtervlies Klasse M besteht.

Für die praktische Anwendung der vorliegenden Erfindung in typischen Betriebs-Situationen ist weiterhin von Vorteil, wenn der vorstehend beschriebene Korpus Absaug- und Reinigungsvorrichtung nach oben hin durch eine zur Aufnahme der der Späne oder sonstige Partikel absondernde Maschine geeigneten Arbeitsplatte abgeschlossen ist. So lassen sich eben jene Maschine und die der Reinigung der verschmutzten Luft dienende Absaug- und Reinigungsvorrichtung besonders zweckmäßig miteinander kombinieren. Im Hinblick auf optimale Arbeitsplatz-Bedingungen weist dabei der Korpus bevorzugt an seiner der Frontseite gegenüberliegenden Rückseite mit der Ausströmkammer kommunizierende Ausströmöffnungen auf. Weitere mit der Ausströmkammer kommunizierende Ausströmöffnungen können dabei in vorteilhafter Weise an der der Ausströmkammer benachbarten Stirnseite des Korpus' vorgesehen sein.

Im Folgenden wird die vorliegende Erfindung anhand eines in der Zeichnung veranschaulichten bevorzugten Ausführungsbeispiels näher erläutert. Dabei zeigt
- Fig. 1: eine Einrichtung zur Bearbeitung von Metall und Nichtmetall enthaltenden Werkstoffverbundwerkstücken mit einer als Schlauchtrennmaschine ausgeführten Maschine zur Bearbeitung von Metall und Nichtmetall enthaltenden Werkstoffverbundwerkstücken und einer Absaug- und Reinigungsvorrichtung für Luft, welche mit von der Schlauchtrennmaschine abgesonderten, Metall und Nichtmetall enthaltenden Spänen oder sonstigen Partikeln belastet ist,
- Fig. 2: die bei der Einrichtung nach Fig. 1 realisierte Luft-Absaug- und Reinigungsvorrichtung in perspektivscher Ansicht auf die Bedienerseite schräg von vorne-links-oben,
- Fig. 3: einen Vertikalschnitt durch die Luft-Absaug- und Reinigungsvorrichtung nach den Figuren 1 und 2,
- Fig. 4: eine teilweise geschnittene perspektivische Ansicht der Luft-Absaug- und Reinigungsvorrichtung nach den Figuren 1 bis 3 schräg von vorne-links-oben und
- Fig. 5: eine teilweise geschnittene perspektivische Ansicht der Luft-Absaug- und Reinigungsvorrichtung nach den Figuren 1 bis 4 schräg von vorne-rechts-oben.

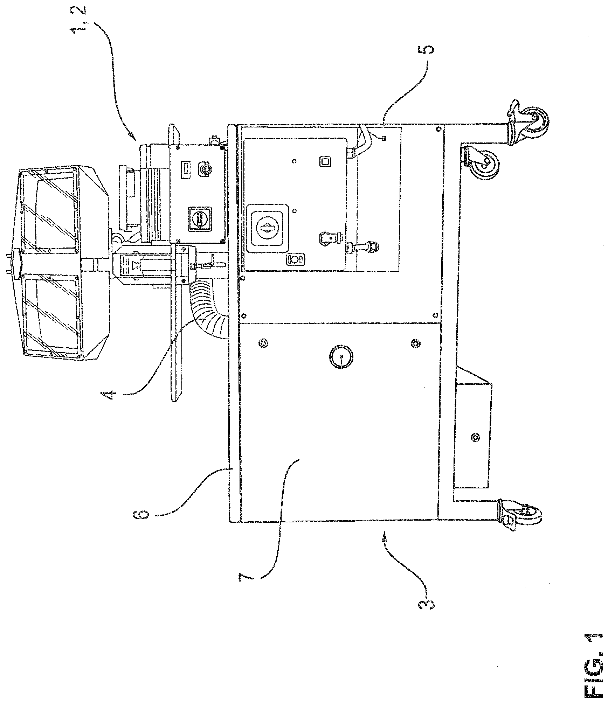

Die in Fig. 1 gezeigte Einrichtung zur Bearbeitung von Metall und Nichtmetall enthaltenden Werkstoffverbundwerkstücken umfasst eine der Bearbeitung solcher Werkstoffverbundwerkstücke dienende Maschine 1, nämlich eine zum Durchtrennen von armierten Hochdruck-Hydraulikschläuchen bestimmte Schlauchtrennmaschine 2. Weiterhin umfasst die gezeigte Einrichtung eine Absaug- und Reinigungsvorrichtung 3 für Luft, welche mit von der Schlauchtrennmaschine 2 abgesonderten, Metall und Nichtmetall enthaltenden Spänen oder sonstigen Partikeln belastet ist. Hierzu ist die Absaug- und Reinigungsvorrichtung 3 mit der Schlauchtrennmaschine 2 über eine Absaugleitung 4 verbunden.

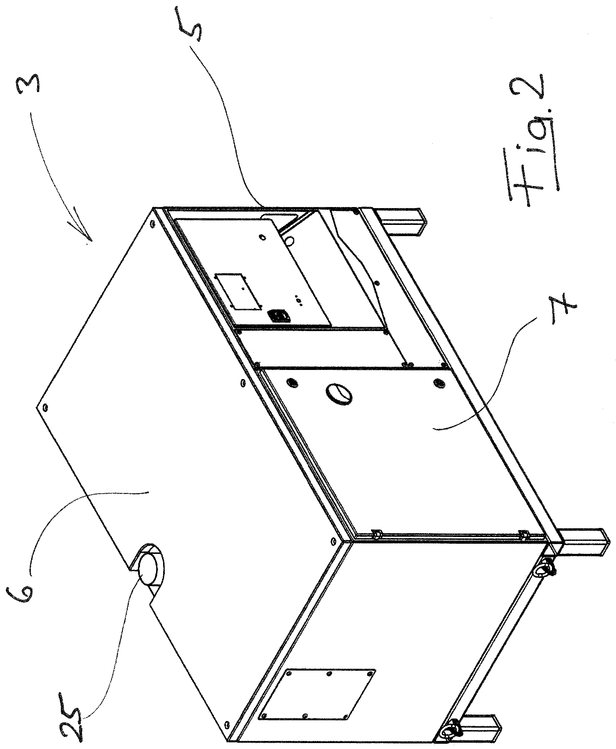

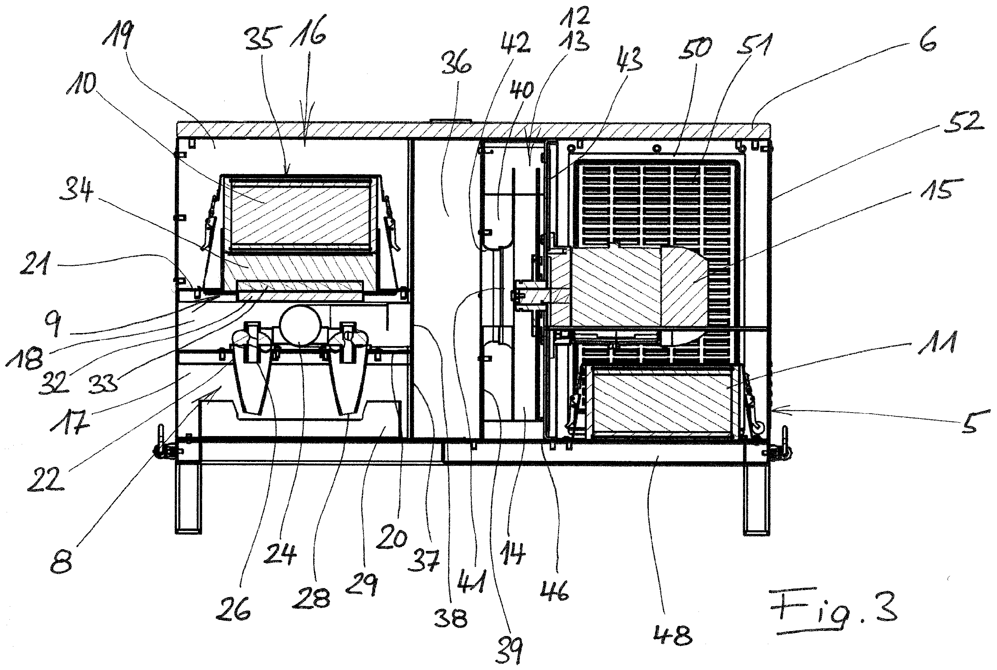

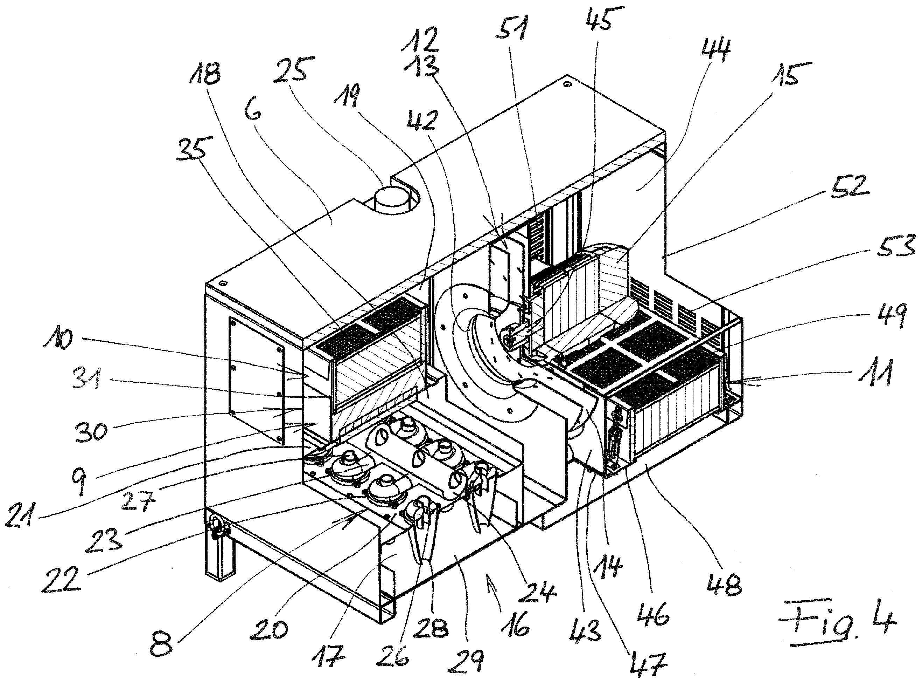

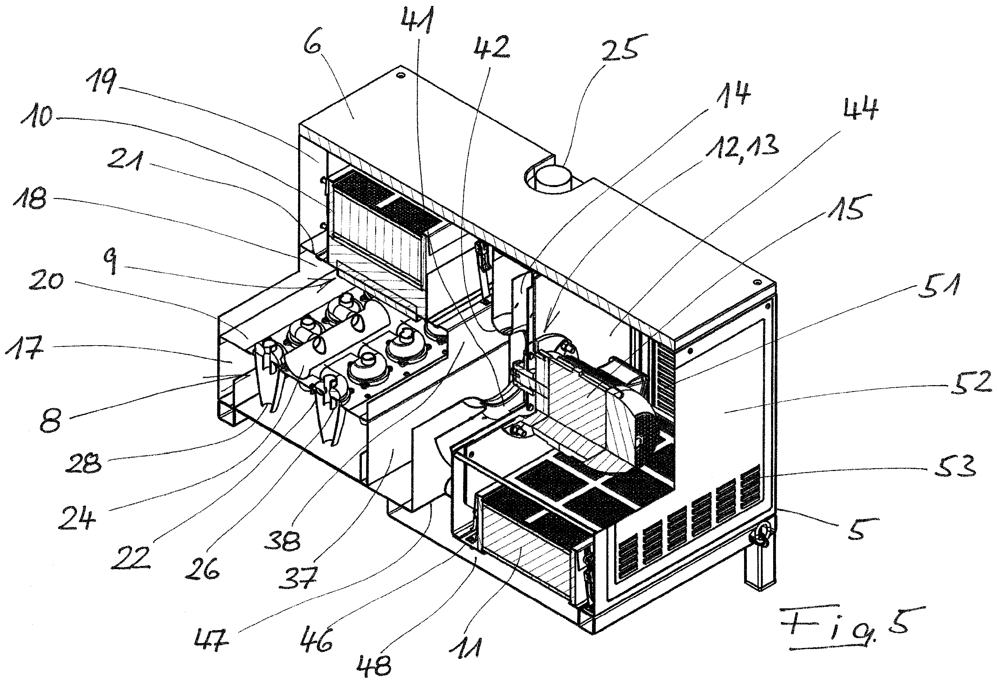

Die Absaug- und Reinigungsvorrichtung 3 weist einen Korpus 5 von etwa kubischer Grundform auf, der oben durch eine Arbeitsplatte 6 abgeschlossen wird. So bildet der Korpus 5 der Absaug- und Reinigungsvorrichtung 3 die Basis für die auf ihrer Arbeitsplatte 6 stehende Schlauchtrennmaschine 2. Der Korpus 5 der - in den Figuren 2 bis 5 im Detail gezeigten Luft-Absaug- und Reinigungsvorrichtung 3 - umfasst mehrere mittels Türen 7 verschlossenen Wartungsöffnungen, durch welche hindurch die verschiedenen Aggregate - insbesondere zu Wartungszwecken - zugänglich sind.

Die Absaugung der Luft von der Schlauchtrennmaschine 2 und Förderung der abgesaugten Luft durch vier Reinigungsstufen (Zyklon-Abscheidestufe 8, mechanische Filterstufe 9, erste Aktivkohle-Filterstufe 10, zweite Aktivkohle-Filterstufe 11) wird dabei durch ein Gebläse 12 besorgt, welches als Radialgebläse 13 ausgeführt ist, wobei das Lüfterrad 14 durch den zugeordneten, seitlich neben dem Lüfterrades 14 angeordneten Motor 15 um die horizontale, liegende Achse herum rotierend angetrieben wird. Drei der vier genannten Reinigungsstufen liegen stromaufwärts des Gebläses 12, d. h. auf dessen Saugseite, eine Reinigungsstufe, nämlich die zweite Aktivkohle-Filterstufe 11, indessen stromabwärts des Gebläses 12, d. h. auf dessen Druckseite.

Die Absaug- und Reinigungsvorrichtung 3 umfasst einen ersten Bereich 16 mit drei übereinander angeordneten Zonen, nämlich einer unteren Zone 17, einer mittleren Zone 18 und einer oberen Zone 19, welcher durch zwei horizontale Trennböden 20, 21 strömungstechnisch voneinander getrennt sind. Die Zyklon-Abscheidestufe 8 weist ein Paket aus acht strömungstechnisch zueinander parallel geschalteten, in den unteren Trennboden 20 eingesetzten Einzelzyklonen 22 auf. Diese sind auf zwei zueinander parallele Reihen à vier Stück aufgeteilt und beidseits eines sie über Zweigrohre 23 beaufschlagenden Verteilerrohres 24 angeordnet, welches mit dem Ansaugstutzen 25 in Verbindung steht. Die nach oben gerichteten, durch die oberen Enden von Tauchrohren 26 gebildeten Luft-Auslässe 27 der acht Einzelzyklone 22 münden offen in die mittlere Zone 18. Die Feststoffauslässe 28 der acht Einzelzyklone 22 münden indessen - oberhalb der Grobschmutzlade 29 - in die untere Zone 17.

Auf den - die obere Zone 19 gegenüber der mittleren Zone 18 abgrenzenden - oberen Trennboden 21 ist eine Filtergruppe 30 aufgesetzt, welche die mechanische Filterstufe 9 und die erste Aktivkohle-Filterstufe 10 umfasst und diese zu einer gemeinsam auswechselbaren Einheit (Filtereinheit 31) zusammenfasst. Die den unteren Teil der Filtereinheit 31 bildende, aus der mittleren Zone 18 durch einen in dem oberen Trennboden 21 angeordneten Durchbruch hindurch angeströmte mechanische Filterstufe 9 ist dreilagig aufgebaut; sie umfasst drei nacheinander durchströmte, unterschiedliche Filtercharakteristiken aufweisende Filterlagen, nämlich eine untere, d. h. als erstes durchströmte Lage 32 aus PPI Filterschaum, eine mittlere, d. h. als zweites durchströmte Lage 33 aus einem Filtervlies Klasse M und eine obere, d. h. als letztes durchströmte Lage 34 in Form eines H13 HEPA Mikrofilters.

Die die mechanische Filterstufe 9 verlassende vorgereinigte Luft gelangt von unten in die - ebenfalls vertikal von unten nach oben durchströmte - erste Aktivkohle-Filterstufe 10. Nach ihrer weitergehenden Reinigung in der ersten Aktivkohle-Filterstufe 10 verlässt die Luft letztere an dem an deren Oberseite angeordneten Austritt 35 und tritt in die obere Zone 19 aus.

Räumlich neben dem - die untere Zone 17, die mittlere Zone 18 und die obere Zone 19 umfassenden - ersten Bereich ist eine mit der oberen Zone 19 des ersten Bereichs kommunizierende Beruhigungszone 36 angeordnet. Diese ist einerseits über Trennwände 37, 38 von der unteren Zone 17 und der mittleren Zone 18 und andererseits über eine Zwischenwand 39 von einer neben ihr angeordneten Gebläsekammer 40 abgetrennt. In der Gebläsekammer 40 ist das Lüfterrad 14 des Gebläses 12 aufgenommen. Die Anströmung der Ansaugöffnung 41 des Gebläses 12 erfolgt durch einen in der Zwischenwand 39 angeordneten kragenartigen Durchbruch 42, welcher den Auslass der Beruhigungszone 36 bildet.

Neben der Gebläsekammer 40 ist, von dieser durch eine Trennwand 43 abgetrennt, eine Ausströmkammer 44 angeordnet. In dieser ist der das Lüfterrad 14 antreibende Motor 15 untergebracht. Die Motorwelle 45 durchdringt somit die Trennwand 43. Auf einer die Ausströmkammer 44 nach unten begrenzenden Bodenplatte 46 ist - unterhalb des Motors 15 - die zweite Aktivkohle-Filterstufe 11 aufgebaut. Diese ist wiederum vertikal von unten nach oben durchströmt. Die Anströmung bzw. Beaufschlagung der zweiten Aktivkohle-Filterstufe 11 aus dem Gebläse 12 heraus erfolgt dabei über einen am Boden der Gebläsekammer 40 vorgesehenen Durchbruch 47, einen unterhalb der Bodenplatte 46 angeordneten Kanal 48 und einen unterhalb der zweiten Aktivkohle-Filterstufe 11 in der Bodenplatte 46 angeordneten Durchbruch. Die in der zweiten Aktivkohle-Filterstufe 11 gereinigte, diese durch den obenliegenden Austritt 49 verlassende Luft verlässt die Ausströmkammer 44 durch an der - der Frontseite des Korpus' 5 gegenüberliegenden - Rückseite 50 angeordnete Ausströmöffnungen 51 sowie durch an der Stirnseite 52 des Korpus' 5 angeordnete Ausströmöffnungen 53.

Erkennbar sind in der Zeichnung weiterhin die frontseitig in dem Korpus 5 angeordneten Türen 7, durch welche hindurch die Filteraggregate der mechanischen Filterstufe 9, der ersten Aktivkohle-Filterstufe 10 und der zweiten Aktivkohle-Filterstufe 11 zugänglich und auswechselbar sind.

## Patentansprüche

1. Einrichtung zur Bearbeitung von Metall und Nichtmetall enthaltenden Werkstoffverbundwerkstücken, umfassend
- eine der Bearbeitung solcher Werkstoffverbundwerkstücke dienende, Metall und Nichtmetall enthaltende Späne oder sonstige Partikel absondernde Maschine (1) und
- eine Absaug- und Reinigungsvorrichtung (3) für mit derartigen Partikeln belastete Luft,
wobei die Absaug- und Reinigungsvorrichtung (3) ein Gebläse (12) und, für eine mehrstufige Reinigung der partikelbelasteten Luft im Vollstrom in strömungstechnischer Abfolge durchströmt, eine Zyklon-Abscheidestufe (8), eine mechanische Filterstufe (9) und zwei Aktivkohle-Filterstufen (10, 11) umfasst,
mit den folgenden Merkmalen:
ein erster Bereich der Absaug- und Reinigungsvorrichtung (3) umfasst, durch zwei horizontale Trennböden (20, 21) strömungstechnisch voneinander getrennt, drei übereinander angeordnete Zonen (17, 18, 19);
die Zyklon-Abscheidestufe (8) weist ein Paket aus mindestens drei, bevorzugt mindestens sechs strömungstechnisch zueinander parallel geschalteten, nach oben gerichtete Luftauslässe (27) für die gereinigte Luft aufweisenden Einzelzyklonen (22) auf, welche dergestalt in den unteren Trennboden (20) eingegliedert sind, dass ihre Feststoffauslässe (28) in die untere Zone (17) und die Luftauslässe (27) in die mittlere Zone (18) münden;
der obere Trennboden (21) weist einen Durchbruch für eine strömungstechnisch zwischen der mittleren Zone (18) und der oberen Zone (19) angeordnete, die mechanische Filterstufe (9) und eine erste Aktivkohle-Filterstufe (10) umfassende Filtergruppe (30) auf;
räumlich neben dem ersten Bereich ist eine mit der oberen Zone (19) des ersten Bereichs kommunizierende Beruhigungszone (36) angeordnet, welche über Trennwände (37, 38) von der ersten Zone (17) und der zweiten Zone (18) abgetrennt ist und über einen in einer Zwischenwand (39), welche die Beruhigungszone (36) von einer neben dieser angeordneten Gebläsekammer (40) trennt, angeordneten Auslass mit der Ansaugöffnung (41) des Gebläses (12) kommuniziert;
das Gebläse (12) ist, bevorzugt als Radialgebläse (13) ausgeführt, mit einem in der Gebläsekammer (40) angeordneten, durch einen Motor (15) um eine horizontale Achse rotierend angetriebenen Lüfterrad (14) ausgeführt;
eine zwischen dem Motor (15) und dem Lüfterrad (14) angeordnete Trennwand (43) trennt die Gebläsekammer (40) von einer neben dieser angeordneten, den Motor (15) beherbergenden Ausströmkammer (44), welche aus der Gebläsekammer (40) heraus über eine zweite Aktivkohle-Filterstufe (11) mit vorgereinigter Luft beaufschlagt wird.

2. Einrichtung nach Anspruch 1, **dadurch gekennzeichnet, dass** die zweite Aktivkohle-Filterstufe (11) vertikal von unten nach oben durchströmt wird.

3. Einrichtung nach Anspruch 2, **dadurch gekennzeichnet, dass** die zweite Aktivkohle-Filterstufe (11) auf einer die Ausströmkammer (44) nach unten begrenzenden Bodenplatte (46) aufgebaut ist und über einen dem Ausgang der Gebläsekammer (40) nachgeschalteten, unterhalb der Bodenplatte (46) angeordneten Kanal (48) angeströmt wird.

4. Einrichtung nach einem der Ansprüche 1 bis 3, **dadurch gekennzeichnet, dass** die Einzelzyklone (22) auf zwei zueinander parallele Reihen aufgeteilt und beidseits eines sie beaufschlagenden Verteilerrohres (24) angeordnet sind.

5. Einrichtung nach einem der Ansprüche 1 bis 4, **dadurch gekennzeichnet, dass** die Filteraggregate der mechanischen Filterstufe (9) und der ersten Aktivkohle-Filterstufe (10) in der Filtergruppe (30) zu einer von unten nach oben durchströmten, gemeinsam auswechselbaren Einheit (31) zusammengefasst sind.

6. Einrichtung nach einem der Ansprüche 1 bis 5, **dadurch gekennzeichnet, dass** die mechanische Filterstufe (9) mehrere nacheinander durchströmte, unterschiedliche Filtercharakteristiken aufweisende Filterlagen (32, 33, 34) aufweist.

7. Einrichtung nach Anspruch 6, **dadurch gekennzeichnet, dass** die als erstes durchströmte Lage (32) der mechanischen Filterstufe (9) aus PPI Filterschaum besteht.

8. Einrichtung nach Anspruch 6 oder Anspruch 7, **dadurch gekennzeichnet, dass** die als letztes durchströmte Lage (34) der mechanischen Filterstufe (9) als H13 HEPA Mikrofilter ausgeführt ist.

9. Einrichtung nach einem der Ansprüche 6 bis 8, **dadurch gekennzeichnet, dass** die mechanische Filterstufe (9) drei nacheinander durchströmte Filterlagen (32, 33, 34) aufweist, wobei die mittlere Lage (33) aus einem Filtervlies Klasse M besteht.

10. Einrichtung nach einem der Ansprüche 1 bis 3, **dadurch gekennzeichnet, dass** die Absaug- und Reinigungsvorrichtung (3) einen Korpus (5) mit frontseitig angeordneten Türen (7) aufweist, durch welche hindurch die Filteraggregate der mechanischen Filterstufe (9), der ersten Aktivkohle-Filterstufe (10) und der zweiten Aktivkohle-Filterstufe (11) zugänglich und auswechselbar sind.

11. Einrichtung nach Anspruch 10, **dadurch gekennzeichnet, dass** der Korpus (5) nach oben hin durch eine zur Aufnahme der der Späne oder sonstige Partikel absondernde Maschine (1) geeigneten Arbeitsplatte (6) abgeschlossen ist.

12. Einrichtung nach Anspruch 10 oder Anspruch 11, **dadurch gekennzeichnet, dass** der Korpus (5) an seiner der Frontseite gegenüberliegenden Rückseite (50) mit der Ausströmkammer (44) kommunizierende Ausströmöffnungen (51) aufweist.

13. Einrichtung nach Anspruch 12, **dadurch gekennzeichnet, dass** der Korpus (5) weiterhin an seiner der Ausströmkammer (44) benachbarten Stirnseite (52) mit der Ausströmkammer (44) kommunizierende Ausströmöffnungen (53) aufweist.

## Claims

1. Device for processing composite workpieces containing metal and non-metal materials, comprising
- a machine (1) for processing such composite workpieces and emitting metal and non-metal chips or other particles, and
- an extraction and cleaning device (3) for air contaminated with such particles,
wherein the extraction and cleaning device (3) comprises a fan (12) and, for multi-stage cleaning of the particle-laden air in full flow, in a flow sequence a cyclone separation stage (8), a mechanical filter stage (9) and two activated carbon filter stages (10, 11),
with the following features:
a first region of the extraction and cleaning device (3) comprises three zones (17, 18, 19) arranged one above the other, separated from each other in terms of flow by two horizontal partitions (20, 21);
the cyclone separation stage (8) comprises a package of at least three, preferably at least six individual cyclones (22) connected in parallel to each other in terms of flow and having upwardly directed air outlets (27) for the purified air, which are integrated into the lower partition (20) such that their solids outlets (28) open into the lower zone (17) and the air outlets (27) open into the middle zone (18);
the upper partition (21) has an opening for a filter group (30) arranged, in terms of flow, between the middle zone (18) and the upper zone (19), which filter group comprises the mechanical filter stage (9) and a first activated carbon filter stage (10);
spatially adjacent to the first region is a settling zone (36), which communicates with the upper zone (19) of the first region, is separated from the first zone (17) and the second zone (18) by partition walls (37, 38), and communicates with the suction opening (41) of the blower (12) via an outlet arranged in a partition wall (39) separating the settling zone (36) from a blower chamber (40) arranged adjacent thereto;
the fan (12), being preferably designed as a radial fan (13), is designed with a fan wheel (14) arranged in the blower chamber (40) and driven by a motor (15) to rotate about a horizontal axis;
a partition wall (43) arranged between the motor (15) and the fan wheel (14) separates the blower chamber (40) from an outlet chamber (44) arranged adjacent thereto and housing the motor (15), which outlet chamber (44) is supplied with pre-cleaned air from the blower chamber (40) via a second activated carbon filter stage (11).

2. Device according to claim 1, **characterised in that** the second activated carbon filter stage (11) is flowed through vertically from bottom to top.

3. Device according to claim 2, **characterized in that** the second activated carbon filter stage (11) is mounted on a base plate (46) which bounds the outlet chamber (44) downward and is supplied with air via a channel (48) which is arranged downstream of the outlet of the blower chamber (40) and below the base plate (46).

4. Device according to one of claims 1 to 3, **characterized in that** the individual cyclones (22) are divided into two parallel rows and arranged on both sides of a distribution pipe (24) supplying them.

5. Device according to one of claims 1 to 4, **characterized in that** the filter units of the mechanical filter stage (9) and the first activated carbon filter stage (10) are combined in the filter group (30) to form a unit (31) which can be replaced as a whole and through which the flow passes from bottom to top.

6. Device according to one of claims 1 to 5, **characterized in that** the mechanical filter stage (9) has several filter layers (32, 33, 34) with different filter characteristics, which are flowed through one after the other.

7. Device according to claim 6, **characterized in that** the layer (32) of the mechanical filter stage (9) through which the fluid flows first is made of PPI filter foam.

8. Device according to claim 6 or claim 7, **characterized in that** the layer (34) of the mechanical filter stage (9) through which the fluid flows last is designed as an H13 HEPA microfilter.

9. Device according to one of claims 6 to 8, **characterized in that** the mechanical filter stage (9) has three filter layers (32, 33, 34) through which the air flows in succession, the middle layer (33) consisting of a class M filter fleece.

10. Device according to one of claims 1 to 3, **characterized in that** the extraction and cleaning device (3) has a body (5) with doors (7) arranged on the front side, through which the filter units of the mechanical filter stage (9), the first activated carbon filter stage (10) and the second activated carbon filter stage (11) are accessible and replaceable.

11. Device according to claim 10, **characterized in that** the body (5) is closed at the top by a work surface (6) suitable for receiving the machine (1) that emits the chips or other particles.

12. Device according to claim 10 or claim 11, **characterized in that** the body (5) has outlet openings (51) on its rear side (50) opposite the front side, which communicate with the outlet chamber (44).

13. Device according to claim 12, **characterized in that** the body (5) further has exhaust openings (53) on its end face (52) adjacent to the exhaust chamber (44) which communicate with the exhaust chamber (44).

## Revendications

1. Installation destinée à l'usinage de pièces en matériau composite contenant un matériau métallique et non métallique, comprenant
- une machine (1) servant à l'usinage de telles pièces en matériau composite, spécifique aux copeaux contenant un matériau métallique et non métallique ou autres particules, et
- un dispositif d'aspiration et de nettoyage (3) pour l'air chargé en particules de ce type,
sachant que le dispositif d'aspiration et de nettoyage (3) comprend une soufflerie (12) et traverse en flux intégral dans une séquence propre à la technique des fluides pour un nettoyage multiétagé de l'air chargé en particules, un niveau de séparation à cyclone (8), une niveau de filtrage mécanique (9) et deux niveaux de filtrage à charbons actifs (10, 11),
avec les caractéristiques suivantes :
une première zone du dispositif d'aspiration et de nettoyage (3) comprend trois zones (17, 18, 19) disposées l'une sur l'autre, séparées l'une de l'autre selon la technique des fluides par deux fonds de séparation (20, 21) horizontaux ;
le niveau de séparation à cyclone (8) comporte un ensemble composé d'au moins trois, de préférence d'au moins six sorties d'air (27) montées parallèles l'une à l'autre selon la technique des fluides, orientées vers le haut, pour les cyclones individuels (22) comportant l'air nettoyé, lesquels sont incorporés dans les fonds de séparation inférieurs (20) de telle manière que leurs sorties de matières solides (28) débouchent dans la zone inférieure (17) et les orties d'air (27) dans la zone centrale (18) ;
le fond de séparation supérieur (21) comporte un passage pour un groupe de filtres (30) disposé selon la technique des fluides entre la zone centrale (18) et la zone supérieure (19), comprenant le niveau de filtrage mécanique (9) et un premier niveau de filtrage à charbons actifs (10) ;
une zone de stabilisation (36) communiquant avec la zone supérieure (19) de la première zone est disposée dans l'espace près de la première zone, laquelle est séparée par des parois de séparation (37, 38) de la première zone (17) et de la deuxième zone (18) et communique avec l'ouverture d'aspiration (41) de la soufflerie (12), par une sortie disposée dans une paroi intermédiaire (39), laquelle sépare la zone de stabilisation (36) d'une chambre de soufflerie (40) disposée près de celle-ci ;
la soufflerie (12) est exécutée de préférence sous la forme d'une soufflerie radiale (13) avec une roue de ventilateur (14) disposée dans la chambre de soufflerie (40), entraînée par un moteur (15) en rotation autour d'un axe horizontal ;
une paroi de séparation (43) disposée entre le moteur (15) et la roue de ventilateur (14) sépare la chambre de soufflerie (40) d'une chambre d'écoulement (44) disposée près de celle-ci, logeant le moteur (15), laquelle est sollicitée par de l'air prépurifié depuis la chambre de soufflerie (40) par le biais d'un deuxième niveau de filtrage à charbons actifs (11).

2. Installation selon la revendication 1, **caractérisée en ce que** le deuxième niveau de filtrage à charbons actifs (11) est traversé verticalement du bas vers le haut.

3. Installation selon la revendication 2, **caractérisée en ce que** le deuxième niveau de filtrage à charbons actifs (11) est monté sur une plaque de fond (46) délimitant vers le bas la chambre d'écoulement (44) et est balayé par un conduit (48) monté en aval de la sortie de la chambre de soufflerie (40), disposé en dessous de la plaque de fond (46).

4. Installation selon l'une quelconque des revendications 1 à 3, **caractérisée en ce que** les cyclones individuels (22) sont répartis en deux rangées parallèles l'une à l'autre et sont disposés des deux côtés d'un tuyau de distribution (24) sollicitant ceux-ci.

5. Installation selon l'une quelconque des revendications 1 à 4, **caractérisée en ce que** les ensembles de filtres du niveau de filtrage mécanique (9) et du premier niveau de filtrage à charbons actifs (10) sont réunis dans le groupe de filtres (30) en une unité (31) communément échangeable traversée de bas en haut.

6. Installation selon l'une quelconque des revendications 1 à 5, **caractérisée en ce que** le niveau de filtrage mécanique (9) comporte plusieurs couches de filtres (32, 33, 34) traversées l'une après l'autre comportant des caractéristiques de filtrage différentes.

7. Installation selon la revendication 6, **caractérisée en ce que** la première couche traversée (32) du niveau de filtrage mécanique (9) est composée d'une mousse filtrante PPI.

8. Installation selon la revendication 6 ou la revendication 7, **caractérisée en ce que** la dernière couche traversée (34) du niveau de filtrage mécanique (9) est exécutée sous la forme d'un microfiltre HEPA H13.

9. Installation selon l'une quelconque des revendications 6 à 8, **caractérisée en ce que** le niveau de filtrage mécanique (9) comporte trois couches de filtres (32, 33, 34) traversées l'une derrière l'autre, sachant que la couche centrale (33) est composée d'un produit non-tissé filtrant de Catégorie M.

10. Installation selon l'une quelconque des revendications 1 à 3, **caractérisée en ce que** le dispositif d'aspiration et de nettoyage (3) comporte un corps (5) avec des portes (7) disposées en face avant par lesquelles les ensembles de filtres du niveau de filtrage mécanique (9), du premier niveau de filtrage à charbons actifs (10) et du deuxième niveau de filtrage à charbons actifs (11) sont accessibles et peuvent être changés.

11. Installation selon la revendication 10, **caractérisée en ce que** le corps (5) est fermé vers le haut par une plaque de travail (6) adaptée pour recevoir la machine (1) spécifique aux copeaux ou autres particules.

12. Installation selon la revendication 10 ou la revendication 11, **caractérisée en ce que** le corps (5) comporte sur sa face arrière (50) opposée à la face avant des ouvertures d'écoulement (51) communiquant avec la chambre d'écoulement (44).

13. Installation selon la revendication 12, **caractérisée en ce que** le corps (5) comporte en plus sur sa face avant (52) voisine de la chambre d'écoulement (44) des ouvertures d'écoulement (53) communiquant avec la chambre d'écoulement (44).
